# EUROPEAN PATENT SPECIFICATION

(11) **EP 4 214 660 B1**
(45) Date of publication and mention of the grant of the patent: **09.12.2026**
(21) Application number: 21870452.6
(22) Date of filing: 16.09.2021
(51) Int. Cl.: G06Q 10/0631, G06Q 10/10

(54) **PRESENTATION OF AUTOMATED PETROTECHNICAL DATA MANAGEMENT IN A CLOUD COMPUTING ENVIRONMENT**
DARSTELLUNG VON AUTOMATISIERTER PETROTECHNISCHER DATENVERWALTUNG IN EINER CLOUD-COMPUTING-UMGEBUNG
PRÉSENTATION DE GESTION DE DONNÉES PÉTROTECHNIQUES AUTOMATISÉE DANS UN ENVIRONNEMENT INFORMATIQUE EN NUAGE

(30) Priority: 17.09.2020 US 202062706909 P
(43) Date of publication of application: 26.07.2023
(73) Proprietor: Services Pétroliers Schlumberger, 75007 Paris (FR); GeoQuest Systems B.V., 2586 BJ The Hague (NL)
(72) Inventor: CRUISE, Jamie, London SW1E 6PA (GB); MACGREGOR, Andrew, Pune 411013 (IN); CANTERA RUBIO, Fernando Nahu, Pune 411006 (IN); GOEL, Anuj, Gatwick Sussex RH6 0NZ (GB)
(74) Representative: Schlumberger Intellectual Property Department
(86) International application number: PCT/US2021/071477
(87) International publication number: WO 2022/061350

(56) References cited:
- WO-A1-2020/092300
- US-A1- 2010 010 882
- US-A1- 2012 054 270
- US-A1- 2016 275 133
- US-A1- 2016 275 133
- US-A1- 2018 053 127
- WALTER GÖRLITZ: "Kanban", WIKIPEDIA, 2 September 2020 (2020-09-02), Internet, pages 1 - 4, XP093193676, Retrieved from the Internet <URL:https://en.wikipedia.org/w/index.php?title=Kanban_(development)&oldid=976434326> [retrieved on 20240808]

## Description

### Background

Petrotechnical data may be loaded into a workflow or application to process the data as part of a simulation and/or any other variety of applications relating to oil/gas exploration, analysis, recovery, etc. Loading and managing oil and gas petrotechnical data at a relatively large scale (e.g., in a cloud computing environment) with an immutable data ecosystem may involve extensive and time-consuming manual quality control checks. For example, job failures may occur at any time during data preparation for approval and release to users. Data managers must therefore manually address such failures and intervene at any stage of the job to take appropriate action.

US 2016/275133 A1 describes collecting wellsite data from a plurality of sources, including real-time data sources and macroscopic reports and standardizing based on templates specifying data format and presentation. The data may be automatically corrected using algorithms for diagnosing and correcting errors. Data collected from multiple sources may be time-aligned which may include adjusting manually-logged timestamps for events in macroscopic reports based on real-time data. In this way, heterogeneous data from a plurality of sources may be homogenized. The homogenized data may be used as inputs for wellsite data analysis or to produce various types of quality reports.

Walter Gorlitz: "Kanban" Wikipedia, 2 September 2020, pages 1-4, XP093193676 describes how workflows are managed on Kanban boards.

### Summary

The invention is defined by the independent claims. Advantageous features are defined by the dependent claims. Any aspect, embodiments or examples disclosed herein falling outside the scope of the claims are intended to be understood as examples useful for understanding the invention.

According to an aspect, a method according to claim 1 is provided.

According to another aspect, a computing system according to claim 7 is provided.

According to another aspect, a non-transitory machine-readable medium according to claim 8 is provided.

### Brief Description of the Drawings

Figure 1 illustrates an example of a system that includes various management components to manage various aspects of a geologic environment.
Figure 2 illustrates an example user interface of an empty Kanban board.
Figure 3 illustrates a new submission dialogue screen that may be presented after a file is dragged and dropped to the Kanban board.
Figure 4 illustrates a Process Control screen used in data loading.
Figure 5 shows an example new submission dialogue with a selected frame of reference tab.
Figure 6 shows an example new submission dialogue with a selected geolocation mapping tab.
Figure 7 shows an example new submission dialogue with a selected geolocation mapping tab.
Figure 8 shows a new Kanban card added to an ingest section of a Kanban board after completion of the new submission dialogue.
Figure 9 shows an example job detail screen, which may be presented in response to selection of a Kanban card on a Kanban board while ingestion is being performed for a job represented by the Kanban card.
Figure 10 shows a Kanban card in an approval section of the Kanban board while approval is pending.
Figure 11 shows a list of data records along with a corresponding quality control score and a corresponding quality control status for each of the data records after the Kanban card of Figure 10 is selected.
Figure 12 illustrates an example a computing system.

### Detailed Description

Loading and managing oil and gas petrotechnical data with an immutable data ecosystem may involve extensive and time-consuming manual quality control checks. The level of effort and time may be exponentially higher when working with larger data volumes (e.g., in a cloud computing environment). Accordingly, examples of the present disclosure may facilitate and simplify the loading and/or management of oil and gas petrotechnical data to reduce an amount of time and effort to manually load and manage the data, while improving overall accuracy of the data that is loaded to an application/workflow.

The loading process is automated such that manual intervention to quality control the data is reduced. As described herein, an automated data loading includes:
- Ingestion where the data is brought into the Data Ecoystem;
- Standardization where metadata is generated and the data entity is standardized for storage and display;
- Quality control where both automated data scoring and manual inspection of the data will take place;
- Approval where business approval for use of the data by users is given according to company business processes.

As data loading proceeds through the above-noted stages, data users (e.g., data managers) track and manage each data loading job. Further, aspects of the present disclosure permit data users to intervene at each stage as needed to correct any problems. Aspects of the present disclosure permit access to each stage of the loading job as the job progresses. Accordingly, a horizontal swim lane is provided for each data loading job, with a status card for each of four stages. A data loading workflow is illustrated as a Kanban board. The Kanban board may be used to effectively manage multi-stage data loading workflow. The Kanban board is used by any user (e.g., data managers, data scientists, petrotechnical users, etc.) loading data to an application (e.g., DELFI^{®} (DELFI is a registered trademark of Schlumberger Technology Corporation of Sugar Land, Texas), and/or any other variety of application).

Reference will now be made in detail to examples illustrated in the accompanying drawings and figures..

It will also be understood that, although the terms first, second, etc. may be used herein to describe various elements, these elements should not be limited by these terms. These terms are only used to distinguish one element from another. For example, a first object or step could be termed a second object or step, and, similarly, a second object or step could be termed a first object or step, without departing from the scope of the present disclosure. The first object or step, and the second object or step, are both, objects or steps, respectively, but they are not to be considered the same object or step.

The terminology used in the description herein is for the purpose of describing particular examples and is not intended to be limiting. As used in this description and the appended claims, the singular forms "a," "an" and "the" are intended to include the plural forms as well, unless the context clearly indicates otherwise. It will also be understood that the term "and/or" as used herein refers to and encompasses any possible combinations of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, as used herein, the term "if" may be construed to mean "when" or "upon" or "in response to determining" or "in response to detecting," depending on the context.

Attention is now directed to processing procedures, methods, techniques, and workflows that are in accordance with some examples.

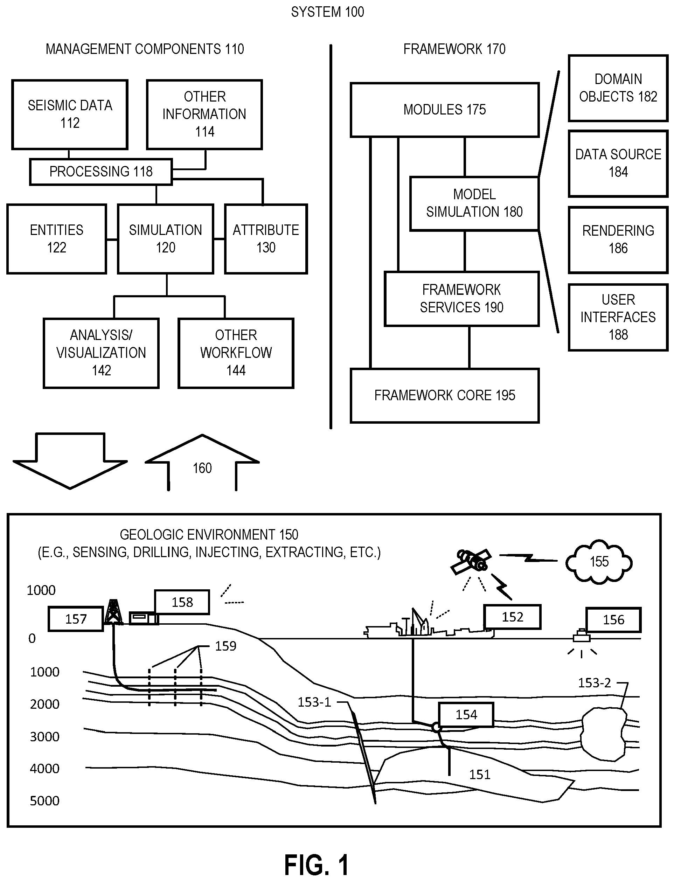

Figure 1 illustrates an example of a system 100 that includes various management components 110 to manage various aspects of a geologic environment 150 (e.g., an environment that includes a sedimentary basin, a reservoir 151, one or more faults 153-1, one or more geobodies 153-2, etc.). For example, the management components 110 may allow for direct or indirect management of sensing, drilling, injecting, extracting, etc., with respect to the geologic environment 150. In turn, further information about the geologic environment 150 may become available as feedback 160 (e.g., optionally as input to one or more of the management components 110).

In the example of Figure 1, the management components 110 include a seismic data component 112, an additional information component 114 (e.g., well/logging data), a processing component 116, a simulation component 120, an attribute component 130, an analysis/visualization component 142 and a workflow component 144. In operation, seismic data and other information provided per the components 112 and 114 may be input to the simulation component 120.

In an example, the simulation component 120 may rely on entities 122. Entities 122 may include earth entities or geological objects such as wells, surfaces, bodies, reservoirs, etc. In the system 100, the entities 122 can include virtual representations of actual physical entities that are reconstructed for purposes of simulation. The entities 122 may include entities based on data acquired via sensing, observation, etc. (e.g., the seismic data 112 and other information 114). An entity may be characterized by one or more properties (e.g., a geometrical pillar grid entity of an earth model may be characterized by a porosity property). Such properties may represent one or more measurements (e.g., acquired data), calculations, etc.

In an example, the simulation component 120 may operate in conjunction with a software framework such as an object-based framework. In such a framework, entities may include entities based on pre-defined classes to facilitate modeling and simulation. A commercially available example of an object-based framework is the MICROSOFT^{®} .NET^{®} framework (Redmond, Washington), which provides a set of extensible object classes. In the .NET^{®} framework, an object class encapsulates a module of reusable code and associated data structures. Object classes can be used to instantiate object instances for use in by a program, script, etc. For example, borehole classes may define objects for representing boreholes based on well data.

In the example of Figure 1, the simulation component 120 may process information to conform to one or more attributes specified by the attribute component 130, which may include a library of attributes. Such processing may occur prior to input to the simulation component 120 (e.g., consider the processing component 116). As an example, the simulation component 120 may perform operations on input information based on one or more attributes specified by the attribute component 130. In an example, the simulation component 120 may construct one or more models of the geologic environment 150, which may be relied on to simulate behavior of the geologic environment 150 (e.g., responsive to one or more acts, whether natural or artificial). In the example of Figure 1, the analysis/visualization component 142 may allow for interaction with a model or model-based results (e.g., simulation results, etc.). As an example, output from the simulation component 120 may be input to one or more other workflows, as indicated by a workflow component 144.

As an example, the simulation component 120 may include one or more features of a simulator such as the ECLIPSE^{™} reservoir simulator (Schlumberger Limited, Houston Texas), the INTERSECT^{™} reservoir simulator (Schlumberger Limited, Houston Texas), etc. As an example, a simulation component, a simulator, etc. may include features to implement one or more meshless techniques (e.g., to solve one or more equations, etc.). As an example, a reservoir or reservoirs may be simulated with respect to one or more enhanced recovery techniques (e.g., consider a thermal process such as SAGD, etc.).

In an example, the management components 110 may include features of a commercially available framework such as the PETREL^{®} seismic to simulation software framework (Schlumberger Limited, Houston, Texas). The PETREL^{®} framework provides components that allow for optimization of exploration and development operations. The PETREL^{®} framework includes seismic to simulation software components that can output information for use in increasing reservoir performance, for example, by improving asset team productivity. Through use of such a framework, various professionals (e.g., geophysicists, geologists, and reservoir engineers) can develop collaborative workflows and integrate operations to streamline processes. Such a framework may be considered an application and may be considered a data-driven application (e.g., where data is input for purposes of modeling, simulating, etc.).

In an example, various aspects of the management components 110 may include add-ons or plug-ins that operate according to specifications of a framework environment. For example, a commercially available framework environment marketed as the OCEAN^{®} framework environment (Schlumberger Limited, Houston, Texas) allows for integration of add-ons (or plug-ins) into a PETREL^{®} framework workflow. The OCEAN^{®} framework environment leverages .NET^{®} tools (Microsoft Corporation, Redmond, Washington) and offers stable, user-friendly interfaces for efficient development. In an example, various components may be implemented as add-ons (or plug-ins) that conform to and operate according to specifications of a framework environment (e.g., according to application programming interface (API) specifications, etc.).

Figure 1 also shows an example of a framework 170 that includes a model simulation layer 180 along with a framework services layer 190, a framework core layer 195 and a modules layer 175. The framework 170 may include the commercially available OCEAN^{®} framework where the model simulation layer 180 is the commercially available PETREL^{®} model-centric software package that hosts OCEAN^{®} framework applications. In an example, the PETREL^{®} software may be considered a data-driven application. The PETREL^{®} software can include a framework for model building and visualization.

As an example, a framework may include features for implementing one or more mesh generation techniques. For example, a framework may include an input component for receipt of information from interpretation of seismic data, one or more attributes based at least in part on seismic data, log data, image data, etc. Such a framework may include a mesh generation component that processes input information, optionally in conjunction with other information, to generate a mesh.

In the example of Figure 1, the model simulation layer 180 may provide domain objects 182, act as a data source 184, provide for rendering 186 and provide for various user interfaces 188. Rendering 186 may provide a graphical environment in which applications can display their data while the user interfaces 188 may provide a common look and feel for application user interface components.

As an example, the domain objects 182 can include entity objects, property objects and optionally other objects. Entity objects may be used to geometrically represent wells, surfaces, bodies, reservoirs, etc., while property objects may be used to provide property values as well as data versions and display parameters. For example, an entity object may represent a well where a property object provides log information as well as version information and display information (e.g., to display the well as part of a model).

In the example of Figure 1, data may be stored in one or more data sources (or data stores, generally physical data storage devices), which may be at the same or different physical sites and accessible via one or more networks. The model simulation layer 180 may be configured to model projects. As such, a particular project may be stored where stored project information may include inputs, models, results and cases. Thus, upon completion of a modeling session, a user may store a project. At a later time, the project can be accessed and restored using the model simulation layer 180, which can recreate instances of the relevant domain objects.

In the example of Figure 1, the geologic environment 150 may include layers (e.g., stratification) that include a reservoir 151 and one or more other features such as the fault 153-1, the geobody 153-2, etc. As an example, the geologic environment 150 may be outfitted with any of a variety of sensors, detectors, actuators, etc. For example, equipment 152 may include communication circuitry to receive and to transmit information with respect to one or more networks 155. Such information may include information associated with downhole equipment 154, which may be equipment to acquire information, to assist with resource recovery, etc. Other equipment 156 may be located remote from a well site and include sensing, detecting, emitting or other circuitry. Such equipment may include storage and communication circuitry to store and to communicate data, instructions, etc. As an example, one or more satellites may be provided for purposes of communications, data acquisition, etc. For example, Figure 1 shows a satellite in communication with the network 155 that may be configured for communications, noting that the satellite may additionally or instead include circuitry for imagery (e.g., spatial, spectral, temporal, radiometric, etc.).

Figure 1 also shows the geologic environment 150 as optionally including equipment 157 and 158 associated with a well that includes a substantially horizontal portion that may intersect with one or more fractures 159. For example, consider a well in a shale formation that may include natural fractures, artificial fractures (e.g., hydraulic fractures) or a combination of natural and artificial fractures. As an example, a well may be drilled for a reservoir that is laterally extensive. In such an example, lateral variations in properties, stresses, etc. may exist where an assessment of such variations may assist with planning, operations, etc. to develop a laterally extensive reservoir (e.g., via fracturing, injecting, extracting, etc.). As an example, the equipment 157 and/or 158 may include components, a system, systems, etc. for fracturing, seismic sensing, analysis of seismic data, assessment of one or more fractures, etc.

As mentioned, the system 100 may be used to perform one or more workflows. A workflow may be a process that includes a number of worksteps. A workstep may operate on data, for example, to create new data, to update existing data, etc. As an example, a workstep may operate on one or more inputs and create one or more results, for example, based on one or more algorithms. As an example, a system may include a workflow editor for creation, editing, executing, etc. of a workflow. In such an example, the workflow editor may provide for selection of one or more pre-defined worksteps, one or more customized worksteps, etc. As an example, a workflow may be a workflow implementable in the PETREL^{®} software, for example, that operates on seismic data, seismic attribute(s), etc. As an example, a workflow may be a process implementable in the OCEAN^{®} framework. As an example, a workflow may include one or more worksteps that access a module such as a plug-in (e.g., external executable code, etc.).

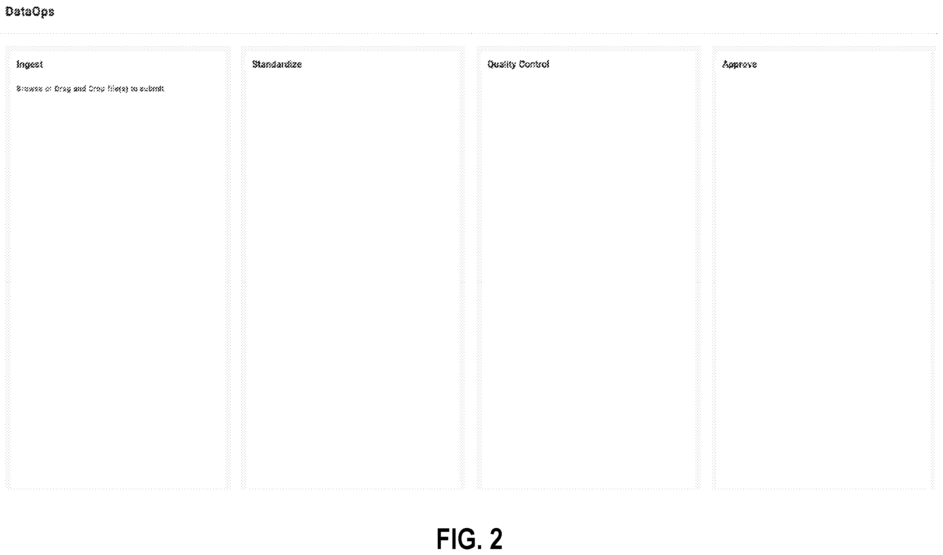

Figure 2 illustrates an example user interface of a Kanban board in accordance with aspects of the present disclosure. As shown in Figure 2, the Kanban board may initially be empty. That is, initially no data loading jobs may be executing. However, if data loading jobs were executing, each data loading job is tracked, e.g. horizontally, across the Kanban board as a series of status or Kanban cards, with a job status for each stage being displayed on the card in a vertical column. In some examples, a user may select any card and may be presented with detailed information on the status of each file or dataset that was part of the loading job. In some situations, some files in the job may fail to load. In such a situation, the user will be able to "drill down" to understand the reason for the failure and to take a corrective action. The user may be presented with additional information to examine the data from the relevant viewer depending on data type. Further, the user may review/edit the metadata associated each data item.

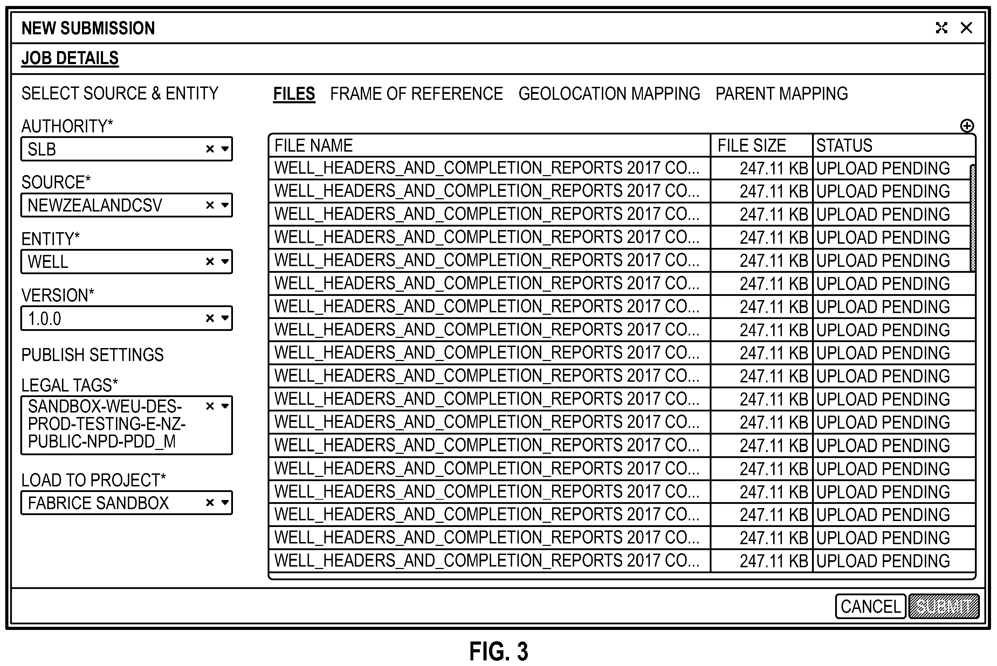

Assuming that the Kanban board is empty, a user can drag and drop data files to the Kanban board such as, for example, a CSV file or other type of file. As a result, a new submission dialogue screen, as shown in Figure 3, may be displayed because input from a user is being requested. Figure 3 shows the new submission dialogue screen with the "Files" tab selected such that names of the files to be uploaded may be displayed along with their current status, which in Figure 3 is shown as "Upload Pending". The new submission dialogue screen may request different inputs depending on a type of the files to be uploaded. For example, a "LAS" file does not need very much additional input because data is automatically read from the "LAS" file itself. For a CSV file, a data type such as, for example, well header data, as shown in Figure 3, or another type of data may be provided. At a minimum, the new submission dialogue screen may request a legal tag and a name of a project to load regardless of the data type. As shown in Figure 3, the user may provide a name of an authority, a source, an entity, and a version number.

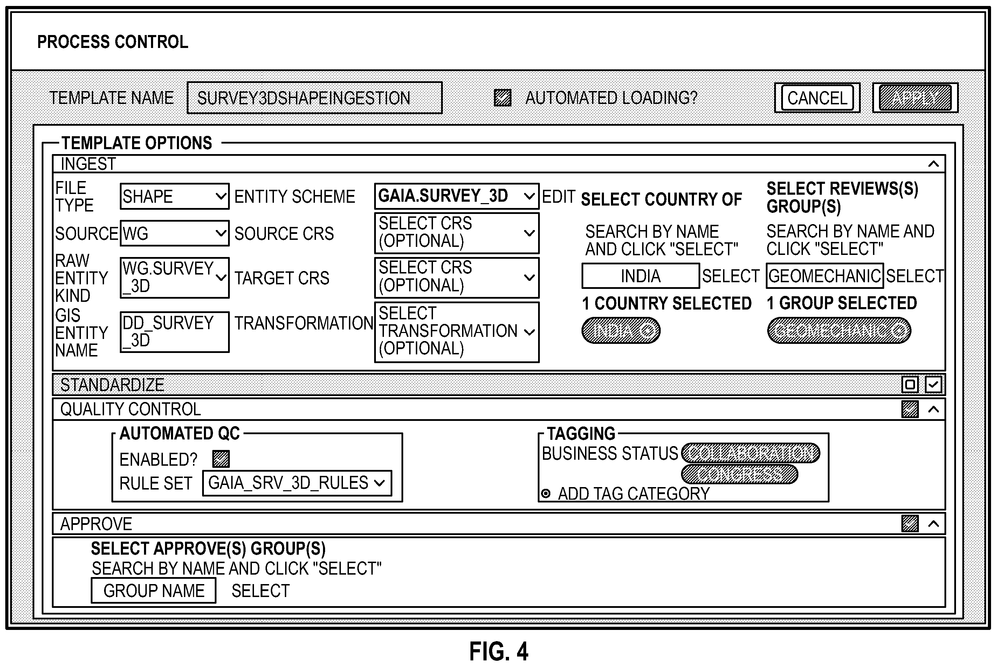

Figure 4 shows an example process control screen. In Figure 4, an ingest portion shows provided input for loading a "shapefile", which may be lines or polygons on a map representing anything from borders, or a country, to a seismic surface. The process control screen may be displayed as part of a new submission dialogue when data of a new data type is to be uploaded. Before loading a file that includes a new currently unknown data type, a schema for this new data type is previously configured. In some examples, when a new data type is to be uploaded, a screen for configuring a schema corresponding to the new data type may automatically be displayed.

During ingestion, file structure is validated against the schema to ensure that it is of the correct type. Incorrect files may fail validation.

Although not shown in detail in Figure 4, standardization may be configured for a newly created data type in order to map properties in a schema to properties of a schema for a standard such as, for example, an OSDU standard.

In Figure 4, automated quality control is enabled in a quality control section using a rule set having a name provided by a user as input. In some examples, quality control may be configured as automated or as manual. If quality control is configured as manual, a data loading job may pause during quality control to wait for a human being to check the data, determine whether the data is valid, and indicate whether the data or portions of the data are approved or rejected. Depending on whether the data or portions of the data are approved or rejected, a tag may be attached to the data indicating whether the data or portions of the data are approved or rejected.

The process control screen further may request a user to provide a group name for an approval group. The approval group is a group of users who are responsible for performing manual approval.

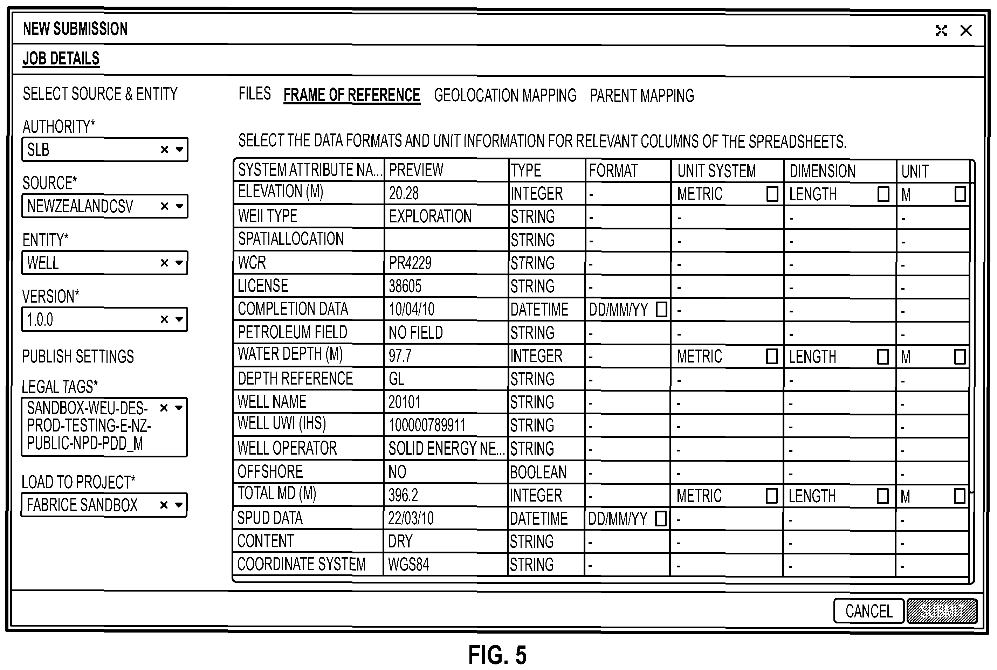

Figure 5 illustrates the new submission dialogue screen of Figure 3 with an optional Frame of Reference tab selected. This screen allows a user to configure a unit system for measurements such as, for example, metric or English, a date format, and a data type for values of various system attributes.

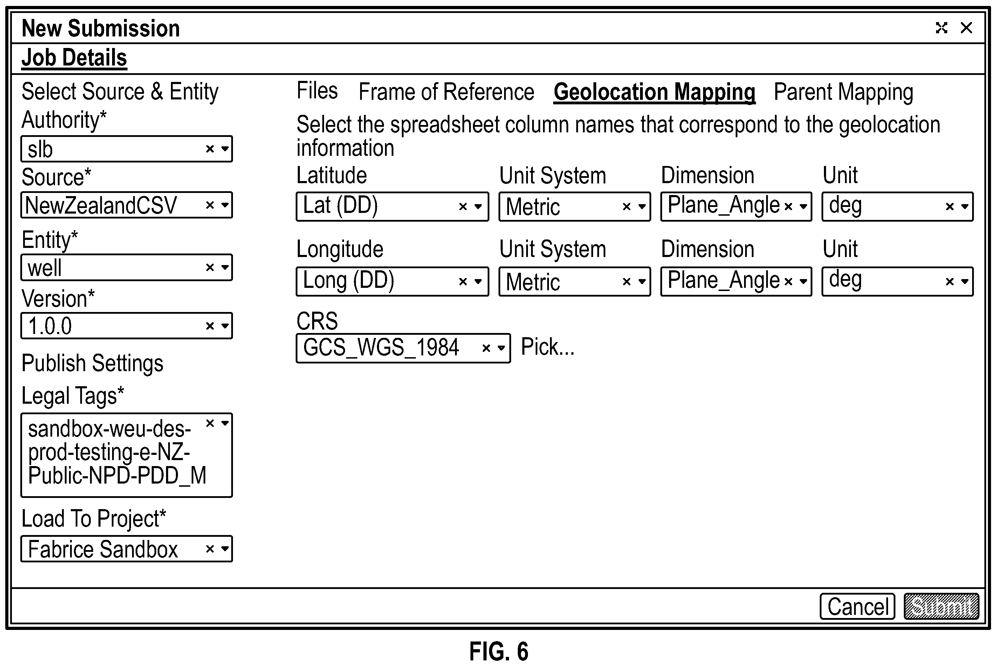

Figure 6 shows the new submission dialogue screen with an optional geolocation mapping tab selected. This screen requests a user to provide spreadsheet column names for latitude and longitude, a coordinate reference system used, and a unit system such as, for example, metric or English.

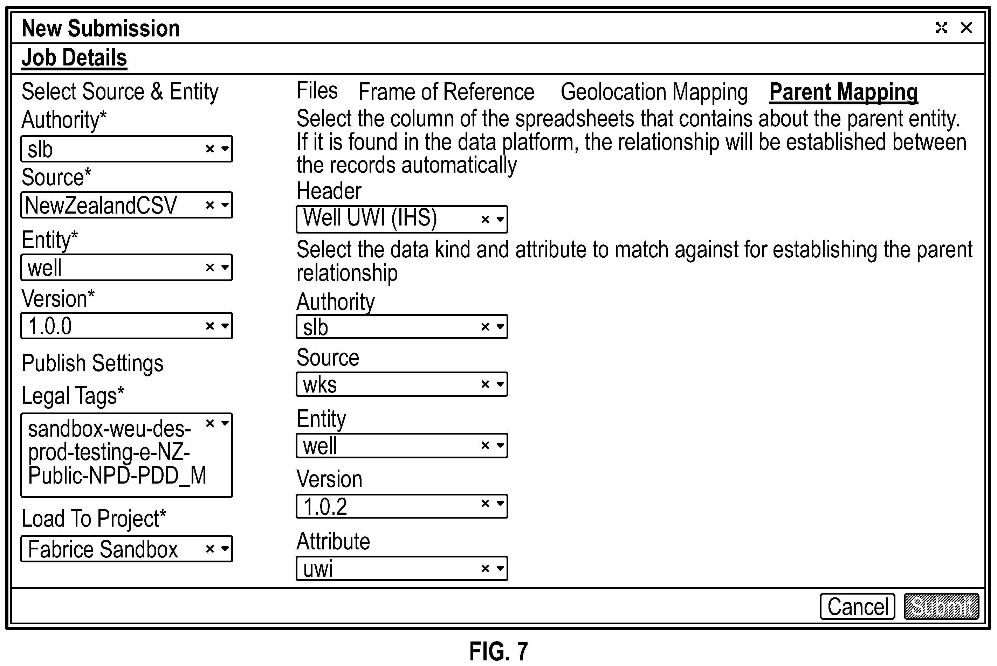

Figure 7 illustrates the new submission screen with a parent mapping tab selected. This screen allows a user to automatically create relationships to existing data. In Figure 7, a user may provide input to indicate that CSV files contain wellbore headers. In this example, a column called ParentWellID may provide information about a respective parent well associated with each child well. If a parent well is found in stored standardized data (for example, OSDU data) that has a same ID as a ParentWellID, then the found well may be marked as a parent well of the respective child well. Thus, according to the input provided via the new submission dialogue screen of Figure 7, each row of a CSV file causes a new record to be created, and for each record created, an attempt may be made to create a relationship to an existing record of type "slb:wks:well:1.0.2" by finding a match with respect to a value of a UWI attribute. In various examples, after selecting "Submit", in Figure 7, a Kanban card will appear in an "Ingest" column of a Kanban board.

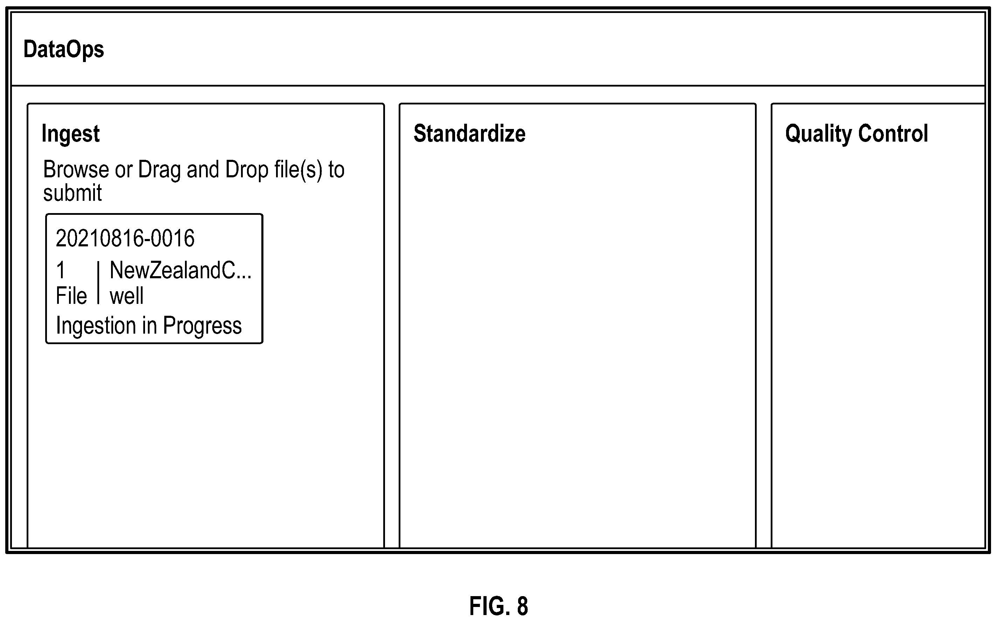

Figure 8 illustrates an example new Kanban card appearing in the "Ingest" column of the Kanban board. As shown, the Kanban card may indicate that ingestion is in progress for one file from a source, NewZealandCSV, for an entity such as a well.

From this point on, automated processes may be performed in a background. As these processes are executed, the Kanban card will move horizontally across the Kanban board. At any time, a user may select a Kanban card using, for example, a pointing device, to open a dialogue that shows what was configured, what was processed, and if processing was completed, what records have been generated. The pointing device may include, but not be limited to, a computer mouse, a user's finger on a touchscreen, or other type of pointing device. Additional details regarding a current status may also be presented. If, at any point, user input is to be requested, horizontal movement of the Kanban card will pause and user intervention will be requested. When user input is to be requested includes when an error occurs, and optionally when a process is to be done manually such as, for example, a manual approval process. Selecting the paused Kanban card causes a dialogue to open requesting actions for a user to take before processing may resume.

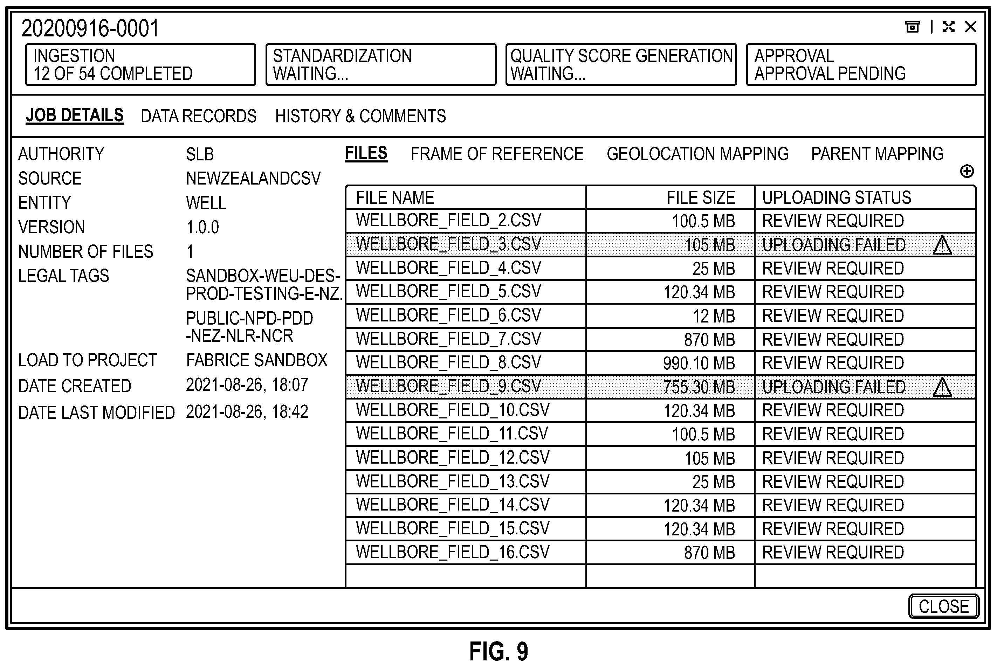

Figure 9 shows an example screen, which may be presented, after a user selects a Kanban card while ingestion is being performed for a job represented by the Kanban card. As shown in Figure 9, files Wellbore_Field_3.csv and Wellbore_Field_9.csv failed to upload. Remaining files had not yet been ingested.

Assuming processing continues as intended, the Kanban card will move to the standardization column, where additional records may be created of a standardized data type such as, for example, an OSDU data type.

After successfully completing standardization the Kanban card will move to the quality control column and a quality score will be calculated for each created record. Assuming, in this example, that quality control does not require any kind of manual quality control action, the Kanban card continues moving horizontally to the approve column.

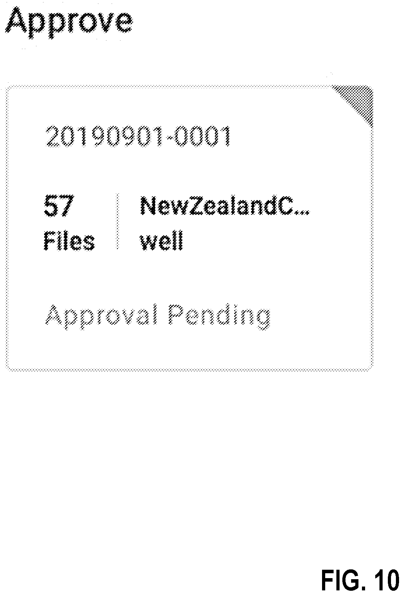

In this example, the approve column requires a manual approval. As shown in Figure 10, the Kanban card is presented in the approve column of the Kanban card and may indicate that approval is pending via text displayed in the Kanban card. Further, a visual indication may be provided to indicate that an approval action is to be performed. In some examples, the visual indication may be a corner of the Kanban card having a color different from a color of a remainder of the Kanban card. In one example, a top right corner of the Kanban card may have a different color. In other examples, a different corner of the Kanban card may have the different color.

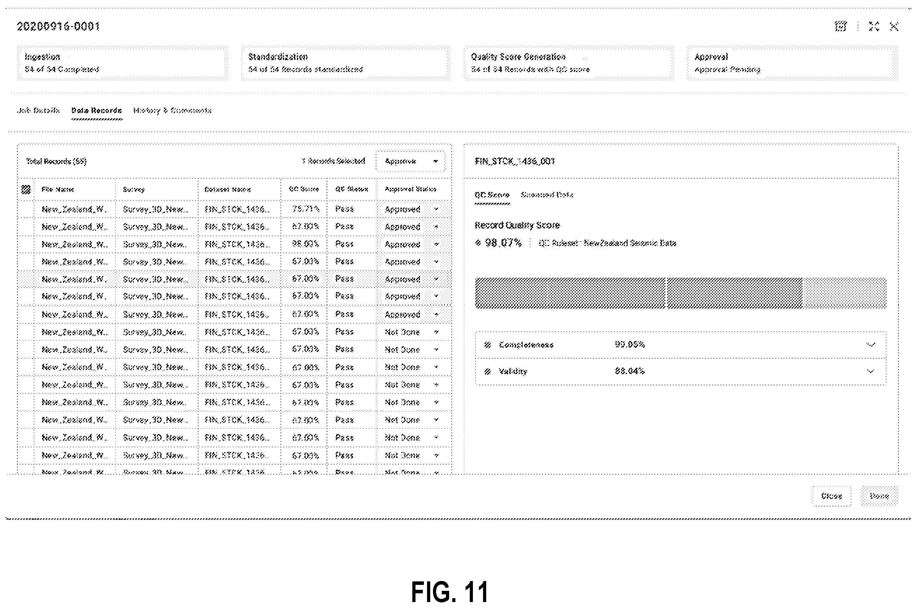

At this point, when the Kanban card is selected, a list of records may be presented along with a quality control score and a quality control status for each file. The quality control status may indicate whether the data in the file passed or failed quality control. An approval status may be displayed indicating whether the data in the file has been approved and tagged or had not yet been approved and tagged, as shown in Figure 11. Other information may also be displayed. For example, a preview of CSV files may be presented, or for seismic data headers, tracers, as well as other information may be presented.

When the approval process is completed, the approved records may be made available to other users and the Kanban card will vanish from the Kanban board. In some examples, the Kanban card may be added to an archived jobs section for keeping a history of jobs.

As described herein, the Kanban board system, in accordance with aspects of the present disclosure, is flexible so as to accommodate variations in types of data and workflows and provides the framework needed to handle all common petrotechnical data types. To use the automated data loading system, described herein, the user may select files that are to be loaded to the data ecosystem.

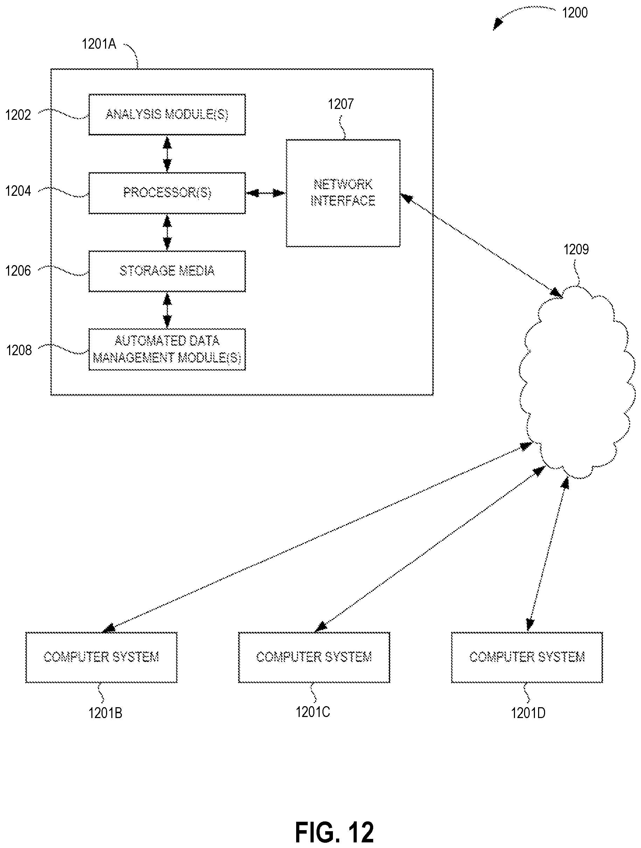

The methods of the present disclosure are executed by one or more computing systems, which may be in a cloud computing environment. Figure 12 illustrates an example of such a computing system 1200, in accordance with some examples. The computing system 1200 includes a computer or computer system 1201A, which may be an individual computer system 1201A or an arrangement of distributed computer systems. The computer system 1201A includes one or more analysis modules 1202 that are configured to perform various tasks including one or more methods disclosed herein. To perform these various tasks, the analysis module 1202 executes independently, or in coordination with, one or more processors 1204, which is (or are) connected to one or more storage media 1206. The processor(s) 1204 is (or are) also connected to a network interface 1207 to allow the computer system 1201A to communicate over a data network 1209 with one or more additional computer systems and/or computing systems, such as 1201B, 1201C, and/or 1201D (note that computer systems 1201B, 1201C and/or 1201D may or may not share the same architecture as computer system 1201A, and may be located in different physical locations, e.g., computer systems 1201A and 1201B may be located in a processing facility, while in communication with one or more computer systems such as 1201C and/or 1201D that are located in one or more data centers, and/or located in varying countries on different continents).

A processor may include a microprocessor, microcontroller, processor module or subsystem, programmable integrated circuit, programmable gate array, or another control or computing device.

The storage media 1206 may be implemented as one or more computer-readable or machine-readable storage media. Note that while in the example of Figure 12 storage media 1206 is depicted as within computer system 1201A, in some examples, storage media 1206 may be distributed within and/or across multiple internal and/or external enclosures of computing system 1201A and/or additional computing systems. Storage media 1206 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories, magnetic disks such as fixed, floppy and removable disks, other magnetic media including tape, optical media such as compact disks (CDs) or digital video disks (DVDs), BLURAY^{®} disks, or other types of optical storage, or other types of storage devices. Note that the instructions discussed above may be provided on one computer-readable or machine-readable storage medium, or may be provided on multiple computer-readable or machine-readable storage media distributed in a large system having possibly plural nodes. Such computer-readable or machine-readable storage medium or media is (are) considered to be part of an article (or article of manufacture). An article or article of manufacture may refer to any manufactured single component or multiple components. The storage medium or media may be located either in the machine running the machine-readable instructions, or located at a remote site from which machine-readable instructions may be downloaded over a network for execution.

In some examples, computing system 1200 contains one or more automated data management module(s) 1208. In the example of computing system 1200, computer system 1201A includes the automated data management module 1208. In some examples, a single automated data management module 1208 may be used to perform some aspects of one or more examples of the methods disclosed herein. In other examples, a plurality of automated data management modules 1208 may be used to perform some aspects of methods herein.

It should be appreciated that computing system 1200 is merely one example of a computing system, and that computing system 1200 may have more or fewer components than shown, may combine additional components not depicted in the example of Figure 12, and/or computing system 1200 may have a different configuration or arrangement of the components depicted in Figure 12. The various components shown in Figure 12 may be implemented in hardware, software, or a combination of both hardware and software, including one or more signal processing and/or application specific integrated circuits.

Further, the steps in the processing methods described herein may be implemented by running one or more functional modules in information processing apparatus such as general purpose processors or application specific chips, such as ASICs, FPGAs, PLDs, or other appropriate devices. These modules, combinations of these modules, and/or their combination with general hardware are included within the scope of the present disclosure.

Computational interpretations, models, and/or other interpretation aids may be refined in an iterative fashion; this concept is applicable to the methods discussed herein. This may include use of feedback loops executed on an algorithmic basis, such as at a computing device (e.g., computing system 1200, Figure 12), and/or through manual control by a user who may make determinations regarding whether a given step, action, template, model, or set of curves has become sufficiently accurate for the evaluation of the subsurface three-dimensional geologic formation under consideration.

## Claims

1. A uniform method for automating and tracking loading and management of a plurality of types of petrotechnical data into a data ecosystem, the uniform method comprising:
ingesting, by at least one computing device (1204), petrotechnical data into the data ecosystem by inputting a file containing the petrotechnical data, wherein during ingestion the file structure is validated against a preconfigured schema corresponding to the data type to be uploaded and wherein a submission screen is displayed including comprising a selectable parent mapping tab and in response to selection of the parent mapping tab, identifying at least one parent well and at least one child well in the petrotechnical data and associating the at least one parent well with the at least one child well;
after successfully ingesting the petrotechnical data, standardizing, by the at least one computing device (1204), the ingested petrotechnical data to generate standardized petrotechnical data and metadata for storage and display;
after successfully generating the standardized petrotechnical data and metadata, quality controlling, by the at least one computing device (1204), the standardized petrotechnical data to produce quality controlled standardized petrotechnical data;
after successfully producing quality controlled standardized petrotechnical data, approving, via the at least one computing device, the quality controlled standardized petrotechnical data;
displaying, by the at least one computing device (1204), progress of the ingesting, the standardizing, the quality controlling, and the approving in a Kanban board visually depicting work at various stages of a process using a plurality of cards to represent respective work items, with a job status for each stage being displayed on the card in a vertical column, wherein on detection of an error during the ingesting, the standardizing, the quality controlling, and the approving, pausing a corresponding Kanban card and requesting user intervention; and
providing the approved quality controlled standardized petrotechnical data of the displayed progress as input to an application/workflow relating to recovery of oil and gas.

2. The uniform method of claim 1, wherein:
the petrotechnical data being ingested, standardized, quality controlled, and approved is for a plurality of jobs,
petrotechnical data of each of the plurality of jobs is of a respective data type, and
the respective data types of at least two of the plurality of jobs are not of the same data type.

3. The uniform method of claim 2, wherein the petrotechnical data is standardized according to a standard.

4. The uniform method of claim 3, wherein the data is standardized according to an Open Group Open Subsurface Data Universe standard.

5. The uniform method of claim 1, further comprising:
receiving, by the at least one computing device, approval of the petrotechnical data after a quality review of the data is completed, wherein
the receiving the approval further comprises attaching an approval tag to the approved petrotechnical data.

6. The uniform method of claim **1,** further comprising:
receiving, by the at least one computing device, a selection of one of a plurality of cards displayed on the Kanban board; and
displaying, by the at least one computing device, detail regarding a task represented by the card in response to the receiving of the selection.

7. A computing system (1201) for automating and tracking loading and management of a plurality of types of petrotechnical data into a data ecosystem, the computing system (1201) comprising:
a processor (1204); and
a memory (1206) connected with the processor (1204), the memory (1206) including instructions for the computing system (1201) to perform operations, wherein the operations comprise the steps of the method of any preceding claim.

8. A non-transitory machine-readable medium having instructions stored thereon to configure a computing device to perform operations, wherein the operations comprise the steps of the method of any of claims 1 to 6.

## Patentansprüche

1. Einheitliches Verfahren zum Automatisieren und Verfolgen eines Ladens und einer Verwaltung einer Vielzahl von Arten petrotechnischer Daten in ein Datenökosystem, das einheitliche Verfahren umfassend:
Aufnehmen, durch mindestens eine Rechenvorrichtung (1204), von petrotechnischen Daten in das Datenökosystem durch Eingeben einer Datei, die die petrotechnischen Daten enthält, wobei, während einer Aufnahme, die Dateistruktur gegen ein vorkonfiguriertes Schema validiert wird, das der hochzuladenden Datenart entspricht, und wobei ein Übermittlungsbildschirm angezeigt wird, einschließlich umfassend eine auswählbare Hauptzuordnungsregisterkarte, und als Reaktion auf eine Auswahl der Hauptzuordnungsregisterkarte, Identifizieren mindestens eines Hauptbohrlochs und mindestens eines Nebenbohrlochs in den petrotechnischen Daten und Verknüpfen des mindestens einen Hauptbohrlochs mit dem mindestens einen Nebenbohrloch;
nach einem erfolgreichen Aufnehmen der petrotechnischen Daten, Standardisieren, durch die mindestens eine Rechenvorrichtung (1204), der aufgenommenen petrotechnischen Daten, um standardisierte petrotechnische Daten und Metadaten für eine Speicherung und Anzeige zu erzeugen;
nach einem erfolgreichen Erzeugen der standardisierten petrotechnischen Daten und Metadaten, Qualitätskontrollieren, durch die mindestens eine Rechenvorrichtung (1204), der standardisierten petrotechnischen Daten, um qualitätskontrollierte standardisierte petrotechnische Daten zu erzeugen;
nach dem erfolgreichen Erzeugen qualitätskontrollierter standardisierter petrotechnischer Daten, Genehmigen, über die mindestens eine Rechenvorrichtung, der qualitätskontrollierten standardisierten petrotechnischen Daten;
Anzeigen, durch die mindestens eine Rechenvorrichtung (1204), eines Fortschritts des Aufnehmens, des Standardisierens, des Qualitätskontrollierens und des Genehmigens in einem Kanban-Board, das eine Arbeit in verschiedenen Stadien eines Prozesses visuell abbildet, unter Verwendung einer Vielzahl von Karten, um jeweilige Arbeitselemente darzustellen, wobei ein Auftragsstatus für jedes Stadium auf der Karte in einer vertikalen Spalte angezeigt wird, wobei bei Erkennung eines Fehlers während des Aufnehmens, des Standardisierens, des Qualitätskontrollierens und des Genehmigens, eine entsprechende Kanban-Karte pausiert und ein Benutzereingriff angefordert wird; und
Bereitstellen der genehmigten qualitätskontrollierten standardisierten petrotechnischen Daten des angezeigten Fortschritts als Eingabe für eine Anwendung/einen Arbeitsablauf, die sich auf eine Förderung von Öl und Gas beziehen.

2. Einheitliches Verfahren nach Anspruch 1, wobei:
die petrotechnischen Daten, die aufgenommen, standardisiert, qualitätskontrolliert und genehmigt werden, für eine Vielzahl von Aufträgen sind,
petrotechnische Daten jedes der Vielzahl von Aufträgen von einer jeweiligen Datenart sind, und
die jeweiligen Datenarten von mindestens zwei der Vielzahl von Aufträgen nicht von derselben Datenart sind.

3. Einheitliches Verfahren nach Anspruch 2, wobei die petrotechnischen Daten gemäß einem Standard standardisiert sind.

4. Einheitliches Verfahren nach Anspruch 3, wobei die Daten gemäß einem Open Group Open Subsurface Data Universe-Standard standardisiert sind.

5. Einheitliches Verfahren nach Anspruch 1, ferner umfassend:
Empfangen, durch die mindestens eine Rechenvorrichtung, einer Genehmigung der petrotechnischen Daten, nachdem eine Qualitätsprüfung der Daten abgeschlossen ist, wobei
das Empfangen der Genehmigung ferner ein Anbringen eines Genehmigungs-Tags an den genehmigten petrotechnischen Daten umfasst.

6. Einheitliches Verfahren nach Anspruch 1, ferner umfassend:
Empfangen, durch die mindestens eine Rechenvorrichtung, einer Auswahl einer von einer Vielzahl von Karten, die auf dem Kanban-Board angezeigt werden; und
Anzeigen, durch die mindestens eine Rechenvorrichtung, eines Details bezüglich eines Tasks, der durch die Karte dargestellt wird, als Reaktion auf das Empfangen der Auswahl.

7. Rechnersystem (1201) zum Automatisieren und Verfolgen des Ladens und der Verwaltung einer Vielzahl von Arten petrotechnischer Daten in ein Datenökosystem, das Rechnersystem (1201) umfassend:
einen Prozessor (1204); und
einen Speicher (1206), der mit dem Prozessor (1204) verbunden ist, wobei der Speicher (1206) Anweisungen für das Rechnersystem (1201) einschließt, um Vorgänge durchzuführen, wobei die Vorgänge die Schritte des Verfahrens nach einem der vorstehenden Ansprüche umfassen.

8. Nichtflüchtiges maschinenlesbares Medium, das darauf gespeicherte Anweisungen aufweist, um eine Rechenvorrichtung zu veranlassen, Vorgänge durchzuführen, wobei die Vorgänge die Schritte des Verfahrens nach einem der Ansprüche 1 bis 6 umfassen.

## Revendications

1. Procédé uniforme permettant d'automatiser et de suivre le chargement et la gestion d'une pluralité de types de données pétrotechniques dans un écosystème de données, le procédé uniforme comprenant :
l'ingestion, par au moins un dispositif informatique (1204), de données pétrotechniques dans l'écosystème de données en entrant un fichier contenant les données pétrotechniques, dans lequel, pendant l'ingestion, la structure de fichier est validée par rapport à un schéma préconfiguré correspondant au type de données à télécharger et dans lequel un écran de soumission est affiché incluant comprenant un onglet de mappage de parent sélectionnable et, en réponse à la sélection de l'onglet de mappage de parent, l'identification d'au moins un puits parent et d'au moins un puits enfant dans les données pétrotechniques et l'association de l'au moins un puits parent à l'au moins un puits enfant ;
après l'ingestion réussie des données pétrotechniques, la normalisation, par l'au moins un dispositif informatique (1204), des données pétrotechniques ingérées pour générer des données pétrotechniques normalisées et des métadonnées pour stockage et affichage ;
après la génération réussie des données pétrotechniques et métadonnées normalisées, le contrôle qualité, par l'au moins un dispositif informatique (1204), des données pétrotechniques normalisées pour produire des données pétrotechniques normalisées soumises à un contrôle qualité ;
après la production réussie de données pétrotechniques normalisées soumises à un contrôle qualité, l'approbation, par l'intermédiaire de l'au moins un dispositif informatique, des données pétrotechniques normalisées soumises à un contrôle qualité ;
l'affichage, par l'au moins un dispositif informatique (1204), de la progression de l'ingestion, de la normalisation, du contrôle qualité et de l'approbation dans un tableau Kanban représentant visuellement le travail à diverses phases d'un procédé en utilisant une pluralité de cartes pour représenter des éléments de travail respectifs, un statut de tâche pour chaque phase étant affiché sur la carte dans une colonne verticale, dans lequel, lors de la détection d'une erreur pendant l'ingestion, la normalisation, le contrôle qualité et l'approbation, la mise en pause d'une carte Kanban correspondante et la demande d'une intervention de l'utilisateur ; et
la fourniture des données pétrotechniques normalisées soumises à un contrôle qualité approuvées de la progression affichée en guise d'entrée pour une application/un flux de travail relatifs à la récupération de pétrole et de gaz.

2. Procédé uniforme selon la revendication 1, dans lequel :
les données pétrotechniques étant ingérées, normalisées, soumises à un contrôle qualité et approuvées sont destinées à une pluralité de tâches,
les données pétrotechniques de chaque tâche de la pluralité de tâches sont d'un type de données respectif, et
les types de données respectifs d'au moins deux tâches de la pluralité de tâches ne sont pas du même type de données.

3. Procédé uniforme selon la revendication 2, dans lequel les données pétrotechniques sont normalisées selon une norme.

4. Procédé uniforme selon la revendication 3, dans lequel les données sont normalisées selon une norme Open Subsurface Data Universe d'Open Group.

5. Procédé uniforme selon la revendication 1, comprenant en outre :
la réception, par l'au moins un dispositif informatique, de l'approbation des données pétrotechniques après l'achèvement d'un examen de la qualité des données, dans lequel
la réception de l'approbation comprend en outre l'ajout d'une étiquette d'approbation aux données pétrotechniques approuvées.

6. Procédé uniforme selon la revendication 1, comprenant en outre :
la réception, par l'au moins un dispositif informatique, d'une sélection d'une carte d'une pluralité de cartes affichées sur le tableau Kanban ; et
l'affichage, par l'au moins un dispositif informatique, d'un détail concernant une tâche représentée par la carte en réponse à la réception de la sélection.

7. Système informatique (1201) permettant d'automatiser et de suivre le chargement et la gestion d'une pluralité de types de données pétrotechniques dans un écosystème de données, le système informatique (1201) comprenant :
un processeur (1204) ; et
une mémoire (1206) connectée au processeur (1204), la mémoire (1206) incluant des instructions pour que le système informatique (1201) effectue des opérations, dans lequel les opérations comprennent les étapes du procédé selon l'une quelconque revendication précédente.

8. Support non transitoire lisible par machine stockant des instructions pour configurer un dispositif informatique pour qu'il effectue des opérations, les opérations comprenant les étapes du procédé selon l'une quelconque des revendications 1 à 6.
